(19) Europäisches Patentamt

European Patent Office

Office européen des brevets

(11) **EP 1 322 698 B1**

(12) **EUROPEAN PATENT SPECIFICATION**

(45) Date of publication and mention
of the grant of the patent:
**30.11.2005 Bulletin 2005/48**

(51) Int Cl.7: **C08J 9/18**, C08J 9/224
// C08L23:12

(21) Application number: **01967750.9**

(22) Date of filing: **20.09.2001**

(86) International application number:
**PCT/JP2001/008187**

(87) International publication number:
**WO 2002/024794 (28.03.2002 Gazette 2002/12)**

(54) **EXPANDED POLYPROPYLENE RESIN BEAD AND PROCESS OF PREPARATION**

EXPANDIERTE POLYPROPENHARZTEILCHEN UND VERFAHREN ZUR HERSTELLUNG

GRAIN DE RESINE EN POLYPROPYLENE EXPANSE ET PROCEDE DE PRODUCTION
CORRESPONDANT

(84) Designated Contracting States:
**AT BE CH CY DE DK ES FI FR GB GR IE IT LI LU
MC NL PT SE TR**

(30) Priority: **20.09.2000 JP 2000285648**

(43) Date of publication of application:
**02.07.2003 Bulletin 2003/27**

(73) Proprietor: **JSP CORPORATION
Tokyo (JP)**

(72) Inventors:
• **SASAKI, Hidehiro,
JSP CORP. KANUMA RESEARCH CENTER
Kanuma-shi, Tochigi 322-0014 (JP)**
• **HIRA, Akinobu,
JSP CORP. KANUMA RESEARCH CENTER
Kanuma-shi, Tochigi 322-0014 (JP)**
• **HASHIMOTO, Keiichi,
JSP CORP. KANUMA RESEARCH CTR
Kanuma-shi, Tochigi 322-0014 (JP)**
• **TOKORO, Hisao,
JSP CORPORATION KANUMA RESEARCH CR
Kanuma-shi, Tochigi 322-0014 (JP)**

(74) Representative: **Waldren, Robin Michael
Lloyd Wise
Commonwealth House,
1-19 New Oxford Street
London WC1A 1LW (GB)**

(56) References cited:
**EP-A- 0 879 844**

EP 1 322 698 B1

**Description**

TECHNICAL FIELD

This invention relates to expanded polypropylene resin beads and a process of producing same. The present invention also pertains to a molded article obtained from the expanded polypropylene resin beads.

BACKGROUND ART

A polypropylene resin is now increasingly utilized in various fields because of excellent mechanical strengths, heat resistance, machinability, cost balance, combustibility and recyclability thereof. Molded, non-crosslinked polypropylene resin foams (hereinafter referred to simply as "PP molding"), which retain the above excellent properties and which have excellent additional characteristics such as cushioning property and heat resistance, are thus utilized for various applications as packaging materials, construction materials, heat insulation materials, etc.

Recently, there is an increasing demand for PP moldings having higher rigidity and lighter weight than the conventional ones. For example, in the field of vehicles such as automobiles, PP moldings have been used in various parts such as bumper cores, door pats, pillars, tool boxes and floor mats. In view of protection of environment and saving of energy, light weight and high rigidity PP moldings retaining excellent cushioning and shock absorbing properties are desired. In the field of containers and boxes for storing and transporting foods such as fish, molded polystyrene foams have been hitherto used. Because of inferior shock and heat resistance, however, molded polystyrene foams are not suitably reused. Therefore, the need for light weight and high rigidity PP moldings is also increasing in this field.

One known method for improving rigidity of PP moldings produced by molding expanded polypropylene resin beads (hereinafter referred to as expanded PP beads) in a mold is to use a high rigidity polypropylene resin as a raw material. Thus, a propylene homopolymer or a propylene copolymer containing a reduced content of a comonomer such as butene or ethylene has been used. Such a high rigidity polypropylene resin, however, has a high melting point and requires a high temperature for molding. When steam is used for molding, it is necessary to use high pressure steam and, therefore, to use a special molding device having a high pressure resistance, in order to attain sufficient melt adhesion between the expanded PP beads.

Another known method for improving rigidity of PP moldings is to use expanded PP beads which show, in a DSC curve thereof, a high temperature peak of a large area in addition to an intrinsic peak which is present in a lower temperature side of the high temperature peak and is inherent to the polypropylene resin. In this case, too, it is necessary to use high pressure steam and, therefore, to use a special molding device having a high pressure resistance, in order to attain sufficient melt adhesion between the expanded PP beads.

DISCLOSURE OF THE INVENTION

It is an object of the present invention to provide expanded, substantially non-crosslinked PP beads which can form a PP molding having high rigidity and high adhesion between beads using steam at a relatively low temperature. Another object of the present invention is to provide a process which can produce the above expanded PP beads.

In accomplishing the foregoing objects, there is provided in accordance with one aspect of the present invention a process for the preparation of expanded polypropylene resin beads wherein the polypropylene resin is defined hereinafter, comprising the steps of:

(a) dispersing substantially non-crosslinked polypropylene resin particles in a dispersing medium containing an organic peroxide to obtain a dispersion;
(b) maintaining said dispersion at a temperature lower than the melting point of said polypropylene resin but sufficient to decompose said organic peroxide, thereby obtaining substantially non-crosslinked, surface-modified polypropylene resin particles the degree of crosslinking being 10% or less; and
(c) expanding said non-crosslinked, surface-modified polypropylene resin particles using a blowing agent to obtain expanded, substantially non-crosslinked polypropylene resin beads.

In another aspect, the present invention provides an expanded, substantially non-crosslinked polypropylene resin bead having a surface region and an inside region which meet with at least one of the following conditions (a) and (b),

(a) each of said surface and inside regions shows a high temperature endothermic peak, in a DSC curve thereof, in addition to an intrinsic endothermic peak located at a lower temperature side of said high temperature peak, wherein said high temperature endothermic peaks of said surface region and said inside region have such areas that correspond to calorific values of Hs and Hi, respectively, and wherein Hs and Hi have the following relationship:

$$Hs < 0.86 \times Hi;$$

(b) said surface region has a greater oxygen content per unit weight than that of said inside region.

The present invention further provides an expanded, substantially non-crosslinked polypropylene resin bead showing a high temperature endothermic peak, in a DSC curve thereof, in addition to an intrinsic endothermic peak located at a lower temperature side of said high temperature peak, said bead having a surface having a melt initiation temperature, by micro differential thermoanalysis, of $(T_m\text{-}5°C)$ or less where $T_m$ is the melting point of the polypropylene resin.

The present invention further provides a molded article obtained by a method comprising filling the above expanded beads in a mold, heating the beads in said mold to form a molding, and cooling said molding.

The present invention further provides a composite molded article, comprising the above molded article, and a surface layer integrally provided on a surface thereof.

The present invention further provides a composite molded article, comprising the above molded article, and an insert integrated therewith such that at least part of said insert is embedded therein.

Other objects, features and advantages of the present invention will become apparent from the detailed description of the preferred embodiments of the invention which follows, when considered in light of the accompanying drawings, in which:

FIG. 1 is an initial DSC curve of expanded polypropylene beads;
FIG. 2 is a second time DSC curve of polypropylene resin particles which have not yet been subjected to surface modification and which have been once subjected to DSC measurement; and
FIG. 3 shows μDTA curves obtained by micro differential thermoanalysis of surfaces of expanded PP beads obtained in Example 7 and Comparative Example 5.

The expanded PP beads according to the present invention are prepared by expanding substantially non-crosslinked polypropylene resin particles. The term "polypropylene resin" as used herein refers to (1) polypropylene homopolymer, (2) a copolymer of propylene and one or more comonomers having a propylene content of at least 60 mole %, a mixture of two or more of the copolymers (2), or a mixture of the homopolymer (1) and the copolymer (2).

The copolymer may be, for example, ethylene-propylene block copolymers, ethylene-propylene random copolymers, propylene-butene radom copolymers or ethylene-propylene-butene random copolymers.

The polypropylene resin preferably has a melting point of at least 130°C, more preferably at least 135°C, further more preferably at least 145°C, most preferably 158-170°C, for reasons of suitable physical properties of PP molding. For reasons of heat resistance of PP molding and expansion efficiency in producing expanded particles, the polypropylene resin preferably has a melt flow rate (MFR) of 0.3-100 g/10 min, more preferably 1-90 g/10 min. The MFR herein is as measured in accordance with the Japanese Industrial Standard JIS K7210-1976, Test Condition 14.

If desired, the polypropylene resin may be used in combination of one or more additional resins or one or more elastomers. The amount of the additional resin or elastomer is preferably no more than 35 parts by weight per 100 parts by weight of the polypropylene resin. Examples of the additional resins include polyethylene resins such as high density polyethylenes, medium density polyethylenes, low density polyethylenes, linear low density polyethylenes, linear very low density polyethylenes, ethylene-vinyl acetate copolymers, ethylene-acrylic acid copolymers, ethylene-methacrylic copolymers; and polystyrene resins such as polystyrene and styrene-maleic anhydride copolymers. Examples of elastomers include ethylene-propylene rubber, ethylene-1-butene rubber, propylene-1-butene rubber, styrene-butadiene rubber, isoprene rubber, neoprene rubber, nitrile rubber, styrene-butadiene block copolymers and hydrogenated products of the above rubbers and copolymers.

The polypropylene resin may also be blended with one or more additives such as an antioxidant, a UV absorbing agent, an antistatic agent, a fire retardant, a metal-deactivator, a pigment, a nucleus agent, a foam controlling agent, a filler, a stabilizer, a reinforcing material and a lubricant. The foam controlling agent may be, for example, an inorganic powder such as zinc borate, talc, calcium carbonate, borax or aluminum hydroxide. The additive or additives are used in an amount of 20 parts by weight or less per 100 parts by weight of the polypropylene resin.

The polypropylene resin particles used as a raw material for the production expanded PP beads according to the present invention may be obtained by any suitable known method. For example, the above-described polypropylene resin, which is generally in the form of pellets, and, if desired, additional resin or elastomer and additive are charged, mixed and kneaded in an extruder. The kneaded mass is then extruded through a die into strands and cut to obtain the polypropylene resin particles. It is preferred that the strands be quenched immediately after being extruded for reasons that the succeeding surface modification with an organic peroxide, which will be described hereinafter, may be efficiently performed. The quenching may be carried out by introducing the strands in water at 50°C or less, preferably 40°C or less, more preferably 30°C or less. The cooled strands are taken out of the water and cut into particles each having a length/diameter ratio of 0.5-2.0, preferably 0.8-1.3, and a mean weight of 0.1-20 mg, preferably 0.2-10 mg. The mean weight is an average of 200 arbitrarily selected particles.

The polypropylene resin particles are dispersed in a dispersing medium containing an organic peroxide to obtain a dispersion. Any dispersing medium may be used as long as it can disperse the polypropylene resin particles therein without dissolving components of the particles. Examples of the dispersing medium include water, ethylene glycol, glycerin, methanol, ethanol or a mixture of them. An aqueous dispersion medium, preferably water, more preferably ion-exchanged water, is suitably used.

The dispersion is heated at a temperature lower than the melting point of the polypropylene resin but sufficient to decompose the organic peroxide, thereby obtaining substantially non-crosslinked, surface-modified polypropylene resin particles. The non-crosslinked, surface-modified polypropylene resin particles are then expanded using a blowing agent to obtain expanded PP beads. The expanded PP beads have excellent fuse-bonding properties and give a high rigidity PP molding in a mold using steam at a relatively low temperature.

Any organic peroxide may be used for the purpose of the present invention as long as it decomposes when heated at a temperature lower than the melting point of the polypropylene resin.

Examples of such organic peroxides include:

isobutylperoxide,
cumyl peroxy neodecanoate,
$\alpha,\alpha'$-bis(neodecanoylperoxy)diisopropylbenzene,
di-n-propyl peroxydicarbonate,
diisopropyl peroxydicarbonate,
1-cyclohexyl-1-methylethyl peroxy neodecanoate,
1,1,3,3-tetramethylbutyl peroxy neodecanoate,
bis(4-t-butylcyclohexyl) peroxydicarbonate,
di-2-ethoxyethyl peroxydicarbonate,
di (2-ethylhexylperoxy) dicarbonate
t-hexyl peroxy neodecanoate,
dimethoxybutyl peroxydicarbonate,
di(3-methyl-3-methoxybutylperoxy)dicarbonate,
t-butyl peroxy neodecanoate,
2,4-dichlorobenzoyl peroxide,
t-hexyl peroxy pivalate,
t-butyl peroxy pivalate,
3,5,5-trimethylhexanoyl peroxide,
octanoyl peroxide,
lauroyl peroxide,
stearoyl peroxide,
1,1,3,3-tetramethylbutyl peroxy 2-ethylhexanoate, succinic peroxide,
2,5-dimethyl-2,5-di(2-ethylhexanoylperoxy)hexane,
1-cyclohexyl-1-methylethyl peroxy 2-ethylhexanoate,
t-hexyl peroxy 2-ethylhexanoate,
t-butyl peroxy 2-ethylhexanoate,
m-toluoyl benzoyl peroxide,
benzoyl peroxide,
t-butyl peroxy isobutylate,
di-t-butylperoxy-2-methylcyclohexane,
1,1-bis(t-hexylperoxy)-3,3,5-trimethylcyclohexane,
1,1-bis(t-butylperoxy)-3,3,5-trimethylcyclohexane,
1,1-bis(t-hexylperoxy)cyclohexane
1,1-bis(t-butylperoxy)cyclohexane,
2,2-bis(4,4-di-t-butylperoxycyclohexyl)propane,
1,1-bis(t-butylperoxy)cyclododecane,
t-hexyl peroxy isopropyl monocarbonate,
t-butyl peroxy maleic acid,

t-butyl peroxy 3,5,5-trimethylhexanoate,
t-butyl peroxy laurate,
2,5-dimethyl-2,5-di(m-toluoylperoxy)hexane,
t-butyl peroxy isopropyl monocarbonate,
t-butyl peroxy 2-ethylhexyl monocarbonate,
t-hexyl peroxy benzoate, and
2,5-dimethyl-2,5-di(benzoylperoxy)hexane.

These organic peroxides may be used alone or in combination. The amount of the organic peroxide in the dispersion is generally 0.01-10 parts by weight per 100 parts by weight of the polypropylene resin particles.

An organic peroxide, when heated, decomposes and generates radicals which causes three types of chain transfer reactions, namely hydrogen extraction, addition and β-degradation. In the case of the present invention, the use of an organic peroxide capable of generating radicals causing addition reactions, especially oxygen radicals, is preferred. A carbonate-type organic peroxide is preferred for this reason. The oxygen radicals may be organic oxy-radical (RO· where R is an organic group derived from the organic peroxide) as well as O-radical (O·). If desired, a chain transfer agent may be added to the polypropylene resin particles-containing dispersion or previously incorporated into the polypropylene resin particles.

Hitherto, the following methods are known to use an organic peroxide in connection with a polypropylene resin:

(1) A method in which polypropylene resin particles are uniformly impregnated with an organic peroxide and a crosslinking aid, the resulting resin particles being subsequently heated at a temperature higher than the melting point of the polypropylene resin to decompose the organic peroxide and to crosslink the polypropylene resin;

(2) A method in which a composition containing polypropylene and an organic peroxide is kneaded in an extruder to decompose the organic peroxide and to decompose the polypropylene, thereby obtaining polypropylene having a narrower molecular weight distribution (JP-A-H03-152136);

(3) A method in which polypropylene particles are uniformly impregnated with an organic peroxide and a crosslinking aid, the resulting resin particles being subsequently heated at a temperature lower than the melting point of the polypropylene to decompose the organic peroxide and to introduce a long chain branch or crosslinking structure into the polypropylene resin. The polypropylene resin particles thus having an improved melt tension is kneaded with a blowing agent in an extruder and extruded (JP-A-H11-80262);

(4) A method in which a polypropylene resin is mixed and kneaded with an organic peroxide and maleic anhydride in an extruder at a temperature higher than the melting point of the polypropylene resin to graft polymerize the maleic anhydride on the polypropylene resin.

The method of the present invention in which a dispersion containing polypropylene resin particles and an organic peroxide is maintained at a temperature lower than the melting point of the polypropylene resin but sufficient to decompose the organic peroxide, thereby obtaining substantially non-crosslinked, surface-modified polypropylene resin particles is thus distinct from the above known methods (1)-(4).

In the present invention, the organic peroxide is heated at a temperature lower than the melting point of the polypropylene resin but sufficient to substantially decompose the organic peroxide. It is preferred that the organic peroxide is a substance half the amount of which decomposes when maintained for 1 hour at a temperature Th that is not lower than the glass transition point but not higher than the Vicat softening point of the polypropylene resin. The "Vicat softening point" in the present specification is in accordance with Japanese Industrial Standard JIS K 6747-1981. When the temperature Th is higher than the Vicat softening point of the polypropylene resin, it is difficult to substantially decompose the organic peroxide at a temperature lower than the melting point of the polypropylene resin. When the decomposition of the organic peroxide is carried out at a temperature not lower than the melting point of the polypropylene resin, the decomposed organic peroxide will attack not only the surfaces of the polypropylene resin particles but also inside regions thereof, so that expanded PP beads obtained cannot give a desired PP molding.

Thus, it is preferred that the temperature Th be lower by at least 20°C, more preferably by at least 30°C, than the Vcat softening point of the polypropylene resin. It is also preferred that the temperature Th be in the range of 40-100°C, more preferably 50-90°C, for reasons of easiness of handling.

The organic peroxide in the dispersion is desirably substantially decomposed at a temperature not higher than, more preferably lower by at least 20°C than, most preferably lower by at least 30°C than, the Vicat softening point of the polypropylene resin. Further, the organic peroxide in the dispersion is desirably substantially decomposed at a temperature not lower than the glass transition point of the polypropylene resin, more preferably at a temperature in the range of 40-100°C, most preferably 50-90°C, for reasons of easiness in handling of the peroxide. The term "substantially decompose" as used herein means that at least 50 % of the peroxide is decomposed. Preferably, the degree of decomposition of the organic peroxide is at least 70 %, more preferably at least 80 %, most preferably at least 95 %.

In the present invention, the polypropylene resin, the polypropylene resin particles, the surface-modified polypropylene resin particles, expanded PP beads and PP molding are substantially non-crosslinked. The term "substantially non-crosslinked" as used herein is as defined below.

Sample resin is immersed in xylene (100 ml xylene per 1 g sample resin) and the mixture is refluxed for 8 hours. The mixture is then immediately filtered through a 74 µm wire net (specified in Japanese Industrial Standard JIS Z8801 (1966)). The dry weight of the xylene-insoluble matters left on the wire net is measured. A crosslinking degree P (%) is calculated from the formula:

$$P\ (\%) = (M/L) \times 100$$

wherein M represents the weight (g) of the xylene-insoluble matters and L represents the weight (g) of the sample. "Substantially non-crosslinked" means that the crosslinking degree P is 10 % or less.

In the present invention, the crosslinking degree P of the polypropylene resin, the polypropylene resin particles, the surface-treated (or surface modified) polypropylene resin particles, expanded PP beads and PP molding is preferably 5 % or less, more preferably 3 % or less, most preferably 1 % or less. In general, the surface treatment does not result in an increase of the crosslinking degree P.

The surface-modified polypropylene resin particles are then expanded to obtain expanded PP beads using a blowing agent. Preferably, the expansion step is carried out by a conventional dispersion method in which the resin particles are dispersed in a dispersing medium in a closed vessel in the presence of a blowing agent and heated to impregnate the resin particles with the blowing agent. While being maintained under a pressurized condition and at a temperature sufficient to expand the resin particles, the dispersion is discharged from the vessel to an atmosphere of a pressure lower than the pressure in the vessel, thereby obtaining expanded PP beads.

While the surface modification of the polypropylene resin particles with the organic peroxide and the subsequent expansion of the surface-modified polypropylene resin particles may be carried out in separate vessels, it is preferred that that the expansion step be carried out by the dispersion method and that the expansion step be carried out in the same vessel for reasons of efficiency. Namely, the surface modification the polypropylene resin particles and expansion of the surface-modified particles may be carried out by simply conducting the dispersion method after addition of a predetermined amount of the organic peroxide in the dispersion.

The surface-modified polypropylene resin particles, expanded PP beads obtained therefrom and PP molding obtained from the beads may contain 100-8000 ppm by weight of an alcohol having a molecular weight of 50 or more and produced by the decomposition of the organic peroxide.

For example, p-t-butylcyclohexanol may be present in the expanded PP beads, when bis(4-t-butylcyclohexyl) peroxydicarbonate is used as the organic peroxide. i-Propanol, s-butanol, 3-methoxybutanol, 2-ethylhexylbutanol or t-butanol may be detected, when the corresponding peroxide is used.

To prevent melt-adhesion of the surface-treated particles with each other during the expansion step, it is desirable to add to the dispersing medium a dispersing agent which is finely divided organic or inorganic solids. For reasons of easiness of handling, the use of an inorganic powder is preferred. Illustrative of suitable dispersing agents are natural or synthetic clay minerals (such as kaolin, mica, pyrope and clay), alumina, titania, basic magnesium carbonate, basic zinc carbonate, calcium carbonate and iron oxide. The dispersing agent is generally used in an amount of 0.001-5 parts by weight per 100 parts by weight of the polypropylene resin particles.

To improve the dispersing efficiency of the dispersing agent, namely to reduce the amount of the dispersing agent while retaining its function to prevent melt-adhesion of the surface-treated particles, a dispersion enhancing agent may be added to the dispersing medium. The dispersion enhancing agent is an inorganic compound capable of being dissolved in water in an amount of at least 1 mg in 100 ml of water at 40°C and of providing divalent or trivalent anion or cation. Examples of the dispersion enhancing agents include magnesium chloride, magnesium nitrate, magnesium sulfate, aluminum chloride, aluminum nitrate, aluminum sulfate, ferric chloride, ferric sulfate and ferric nitrate. The use of the dispersion enhancing agent is desirable to obtain expanded PP beads having an apparent density of 100 g/L or more. The dispersion enhancing agent is generally used in an amount of 0.0001-1 part by weight per 100 parts by weight of the polypropylene resin particles.

The blowing agent may be an organic physical blowing agent or an inorganic physical blowing agent. Examples of the organic physical blowing agents include aliphatic hydrocarbons such as propane, butane, pentane, hexane and heptane, alicyclic hydrocarbons such as cyclobutane and cyclohexane, and halogenated hydrocarbons such as chlorofluoromethane, trifluoromethane, 1,2-difluoroethane, 1,2,2,2-tetrafluoroethane, methylchloride, ethylchloride and methylenechloride. Examples of inorganic physical blowing agents include air, nitrogen, carbon dioxide, oxygen, argon and water. These organic and inorganic blowing agents may be used singly or as a mixture of two or more. For reasons of stability (uniformity) of apparent density of expanded PP beads, low costs and freedom of environmental problem, the use of air or nitrogen is preferred. Water as the blowing agent may be that used in dispersing the polypropylene resin particles in the dispersing medium.

The amount of the blowing agent may be suitably determined according to the kind of the blowing agent, expansion temperature and apparent density of the expanded PP beads to be produced. When nitrogen is used as the blowing agent and when water is used as the dispersing medium, for example, the amount of nitrogen is preferably such that the pressure within the closed vessel in a stable state immediately before the initiation of the expansion, namely the pressure (gauge pressure) in the upper space in the closed vessel, is in the range of 0.6-8 MPa(G). In general, the pressure in the upper space in the closed vessel is desirably increased as the apparent density of the expanded PP beads to be obtained is reduced.

It is preferred that the expansion of the surface-modified polypropylene resin particles be performed so that the expanded PP beads have an apparent density of 10 g/L to 500 g/L. The apparent density (g/L) is obtained by dividing the weight W (g) of the expanded PP beads by the volume V (L) of the apparent volume thereof (density = W/ V). The apparent volume is measured as follows:

In a measuring cylinder, about 5 g of expanded beads are allowed to stand at 23°C for 48 hours in the atmosphere and thereafter immersed in 100 ml water contained in a graduation cylinder at 23°C. From the increment of the volume, the apparent volume can be determined.

It is preferred that the expansion of the surface-modified polypropylene resin particles be performed so that the expanded PP beads have a high temperature endothermic peak, in a DSC curve thereof, in addition to an intrinsic endothermic peak located at a lower temperature side of the high temperature peak, because the expanded PP beads have high content of closed cells and extremely suited to obtain a high rigidity PP molding.

The high temperature peak preferably has such an area corresponding to a calorific value (absolute value) in the range of 2-70 J/g, more preferably 3-65 J/g. When the calorific value of the high temperature peak is less than 2 J/g, the compression strength and shock absorbing power of a PP molding tend to be reduced. Too high a calorific value of the high temperature peak in excess of 70 J/g requires a high pressure to increase the inside pressure in the beads before the molding step. It is preferred that the calorific value of the high temperature peak is 10-60 %, more preferably 20-50 %, of a total of the calorific value of the high temperature peak and the calorific value of the intrinsic peak. The total calorific value is suitably in the range of 40-150 J/g.

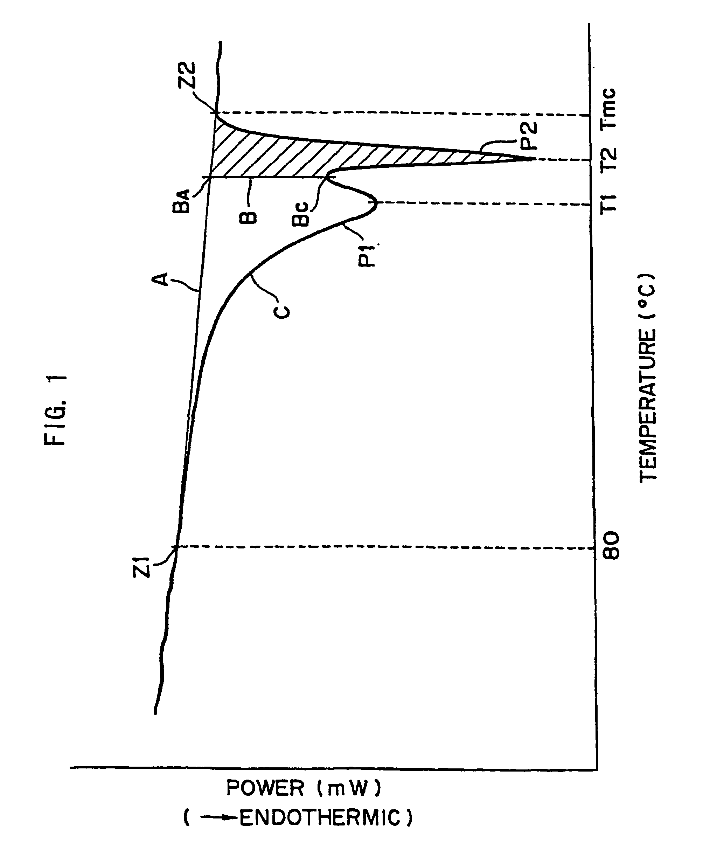

The DSC curve herein is as obtained by the differential scanning calorimetric analysis wherein a sample (2-4 mg of expanded PP beads) is heated from room temperature (10-40°C) to 220°C in an atmosphere of nitrogen at a rate of 10°C/min. FIG. 1 shows an example of a DSC curve having an intrinsic endothermic peak P1 at a peak temperature T1 and a high temperature endothermic peak P2 at a peak temperature T2. The area of a peak corresponds to the calorific value thereof.

The area of the high temperature peak P2 is determined as follows. In the DSC curve (first DSC curve) C having two endothermic peaks P1 and P2 at temperatures T1 and T2, respectively, as shown in Fig. 1, a straight line A extending between the point Z1 in the curve at 80°C and the point Z2 in the curve at a melt completion temperature Tmc is drawn. The melt completion temperature Tmc is represented by a point at which the high temperature peak P2 ends and meets the base line on a high temperature side. Next, a line B which is parallel with the ordinate and which passes a point $B_C$ between the peaks P1 and P2 is drawn. The line B crosses the line A at a point $B_A$. The position of the point $B_C$ is such that the length between the point $B_A$ and the point $B_C$ is minimum. The area of the high temperature peak P2 is the shaded area defined by the line A, line B and the DSC curve C.

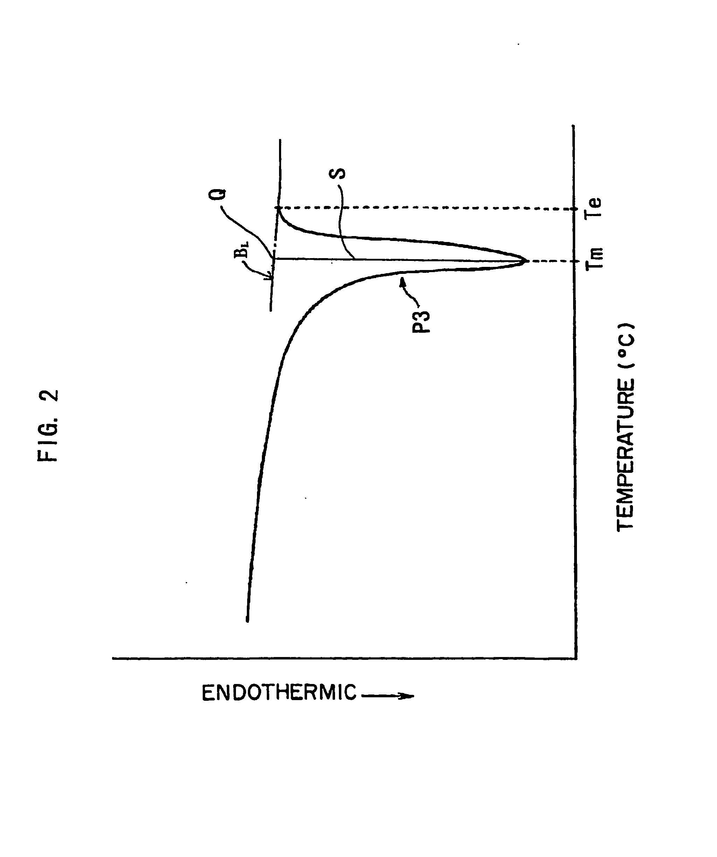

Such a high temperature peak P2 is present in the DSC curve measured first. Once the expanded PP beads have completely melted, the high temperature peak P2 no longer appears. Thus, when the sample after the first DSC measurement is cooled to room temperature (10-40°C) and is measured again for a DSC curve by heating to 220°C in an atmosphere of nitrogen at a rate of 10°C/min, the second DSC curve does not show such a high temperature peak but contains an endothermic peak attributed to the melting of the polypropylene resin, just like a DSC curve shown in FIG. 2.

In the present specification and claims, the term "melting point of the polypropylene resin" is intended to refer to that measured by DSC analysis of polypropylene resin particles which have not yet been subjected to surface modification treatment with an organic peroxide. Namely, "melting point of the polypropylene resin" is measured by the differential scanning calorimetric analysis wherein a sample (2-4 mg of polypropylene resin particles) is heated from room temperature (10-40°C) to 220°C in an atmosphere of nitrogen at a rate of 10°C/min. The sample is then cooled to room temperature (10-40°C) and is measured again for a DSC curve by heating to 220°C in an atmosphere of nitrogen at a rate of 10°C/min to obtain a second DSC curve as shown in FIG. 2. The temperature Tm of the endothermic peak P3 at 130-170°C in the second DSC curve as shown in Fig. 2 is inherent to the polypropylene resin and represents the "melting point of the polypropylene resin". Two or more endothermic peaks might be observed in the second DSC curve, when, for example, the polypropylene resin particles are composed of two or more different polypropylene resins. In this case, the melting point Tm is the peak temperature of that peak which has the greatest peak height among those peaks. When there are a plurality of peaks having the same greatest peak height, then the melting point Tm is the highest peak temperature among those peaks. The term "peak height" herein refers to the length S between the top of the peak P3 and a point Q at which a line parallel with the ordinate and passing through the top of the peak P3 crosses the base line $B_L$. In Fig. 2, the temperature Te at which the endothermic peak P3 ends and meets the base line $B_L$ refers to the "melt completion temperature of the polypropylene resin".

The high temperature peak P2 of expanded PP beads generally appears at a temperature T2 ranging from (Tm + 5°C) to (Tm + 15°C). The endothermic peak P1 of expanded PP beads generally appears at a temperature T1 ranging from (Tm - 5°C) to (Tm + 5°C). The endothermic peak in the second DSC measurement of expanded PP beads generally corresponds to that in the second DSC curve of the precursor polypropylene resin particles and generally appears at a temperature ranging from (Tm - 2°C) to (Tm + 2°C).

As described above, it is preferred that the expanded PP beads have such a crystal structure that a high temperature peak is present in a first DSC curve thereof in addition to an intrinsic peak. A difference between the melting point of the polypropylene resin and expansion temperature has a great influence upon the calorific value (peak area) of the high temperature peak.

The calorific value of the high temperature peak of the expanded PP beads is a factor for determining the minimum temperature of steam which provides a saturated steam pressure required for melt-bonding the beads to each other. In general, when the same polypropylene resin is used, the smaller the calorific value of the high temperature peak, the lower becomes the minimum temperature. Further, the higher the expansion temperature, the smaller becomes the calorific value of the high temperature peak.

When expanded PP beads having a small calorific value of the high temperature peak are used, the mechanical properties of the resulting PP molding are relatively low, though the minimum temperature required for melt-bonding the beads can be low. On the other hand, when expanded PP beads having a large calorific value of the high temperature peak are used, the mechanical properties of the resulting PP molding are relatively high. In this case, however, since the minimum temperature required for melt-bonding the beads is high, it is necessary to use high pressure steam for the production of PP moldings. Thus, the most preferred expanded PP beads would be such that the calorific value of the high temperature peak thereof is large but the minimum temperature required for melt-bonding the beads is low. The present invention does provide such ideal expanded PP beads. The expanded PP beads according to the present invention can give a high rigidity PP molding without using a high temperature steam.

The expanded PP beads providing a DSC curve having such a high temperature peak can be suitably produced by maintaining the dispersion containing the surface-modified polypropylene resin particles in a vessel at a first fixed temperature between a temperature lower by 20°C than the melting point of the polypropylene resin (Tm - 20°C) and a temperature lower than the melt completion point of the polypropylene resin (Te) for a period of time of preferably 10 - 60 min, preferably 15 - 60 min and then discharging the dispersion from the vessel after increasing the temperature of the dispersion to a second fixed temperature between a temperature lower by 15°C than the melting point of the polypropylene resin (Tm - 15°C) and a temperature higher by 10°C than the melt completion point of the polypropylene resin (Te + 10°C) or, if necessary, after maintaining the dispersion at the second fixed temperature for a period of time of 10 - 60 min.

The area of the high temperature peak mainly depends upon the above first fixed temperature at which the dispersion is maintained before expansion treatment, the time for which the dispersion is maintained at the first fixed temperature, the above second fixed temperature, the time for which the dispersion is maintained at the second fixed temperature, the heating rate at which the dispersion is heated to the first fixed temperature and the heating rate at which the dispersion is heated from the first fixed temperature to the second fixed temperature. The area of the high temperature peak increases with an increase of the retention time at the first and second fixed temperatures. The heating rate (average heating rate from the commencement of heating until the fixed temperature is reached) in each of the heating stage up to the first fixed temperature and the succeeding heating stage from the first fixed temperature to the second fixed temperature is generally 0.5-5°C per minute. Suitable conditions for the preparation of expanded PP beads having desired calorific value of the high temperature peak can be determined by preliminary experiments on the basis of the above points.

The above temperature ranges for the formation of the high temperature peak and for the expansion of the polypropylene resin particles are suitably adopted in the case where an inorganic physical blowing agent is used. When an organic physical blowing agent is used, the suitable temperature ranges will shift toward low temperature side and vary with the kind and amount of the organic physical blowing agent.

The expanded PP beads according to the present invention preferably have at least one of the following characteristics.

A surface region of the expanded PP bead preferably has a melting point (Tms) lower than the melting point (Tmi) of an inside region thereof (Tms<Tmi). The difference between the melting point (Tmi - Tms) is preferably at least 0.05°C, more preferably at least 0.1°C, most preferably at least 0.3°C. The melting point Tms is determined as follows. A surface region of the expanded PP bead is cut and about 2-4 mg of such cut samples are collected. The sample is subjected to DSC analysis in the same manner as described previously with regard to the measurement of the melting point Tm. The peak temperature of a peak corresponding to the endothermic peak P3 in the second DSC curve represents the melting point Tms. The melting point Tmi is also measured in the same manner as above except that inside region of the bead is cut and collected.

In the case of the expanded PP bead having a high temperature endothermic peak in a DSC curve thereof, the calorific value Hs of the high temperature endothermic peak of the surface region of the bead is preferably smaller than the calorific value Hi of the high temperature endothermic peak of the inside region of the bead such that the following relationship is established:

$$Hs < 0.86 \times Hi.$$

The Hs and Hi of the expanded PP bead preferably have the following relationship:

$$Hs < 0.83 \times Hi,$$

more preferably

$$Hs < 0.80 \times Hi$$

for reasons that the expanded PP beads can be molded at a relatively low temperature. For the same reason, it is also preferred that Hs is in the range of 1.7-60 J/g, more preferably 2-50 J/g, further more preferably 3-45 J/g, most preferably 4-40 J/g.

The calorific value of the surface region and inside region of the expanded PP bead are determined as follows. Surface region and inside region of the expanded PP bead are cut and about 2-4 mg of such cut samples are collected separately. Each sample is subjected to DSC analysis in the same manner as described previously with regard to the measurement of calorific value of the high temperature peak P2.

The surface region and inside region of the expanded PP bead are sampled by cutting with a knife or a microtome. In sampling of the surface region, the outer surface of the bead should be cut entirely. Further, the surface region must be collected from the bead in an amount of no more than 1/5 but no less than 1/7 of the weight of the original bead. The inside region must not contain any outer surface of the bead. The removal of the surface region is carried out such that the center of gravity of the inside region coincides with that of the original bead as much as possible. In addition, the inside region must be collected from the bead in an amount of no more than 1/4 of the weight of the original bead. When the amount of the surface region and/or inside region obtained from one bead is less than 2 mg, two or more beads are used.

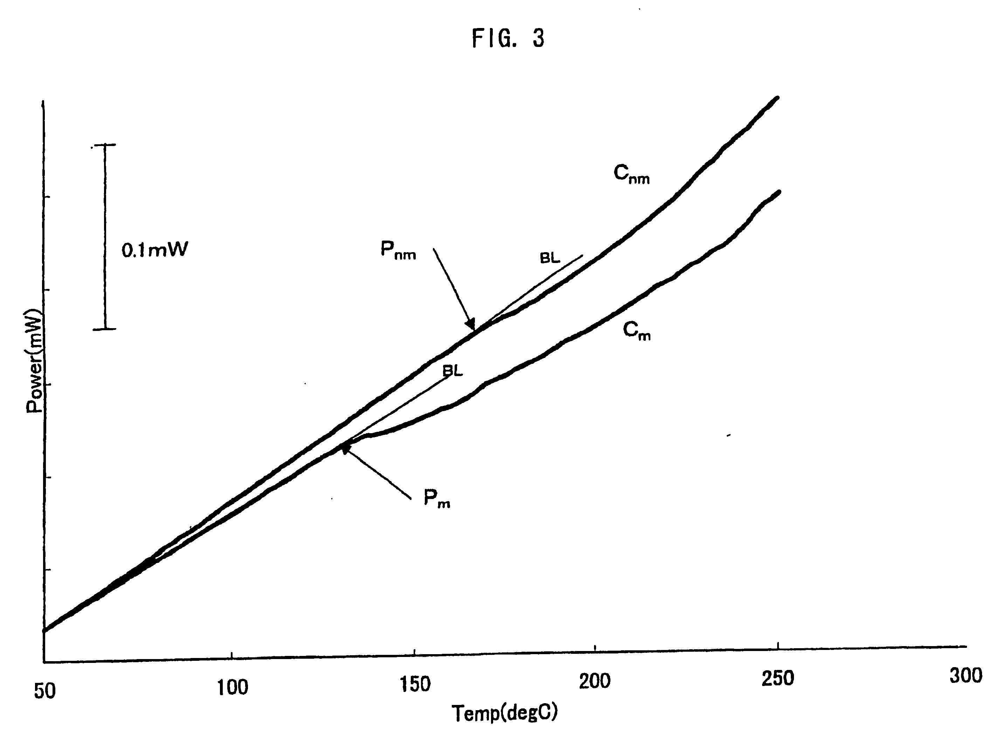

The expanded PP bead preferably has a surface having a melt initiation temperature, as measured by micro differential thermoanalysis, not higher than the melting point of the polypropylene resin. In the conventional expanded PP beads, the melt initiation temperature is higher by at least 5°C than the melting point of the resin. The micro differential thermoanalysis (μDTA) is performed using a micro differential thermoanalysis system ("Type 2990 Micro Thermal Analyzer" of T. A. Instrument, Japan Inc.) at a heating rate of 10°C/sec from 25°C to 200°C. The melt initiation temperature herein refers to a temperature at which a μDTA curve starts separating from the base line thereof. For example, as shown in FIG. 3, the melt initiation temperature is a temperature Pm at which the μDTA curve Cm starts leaving downward (as a result of the start of a change in specific heat) from the base line.

The reduction of the melt initiation temperature in the expanded PP bead of the present invention is considered to contribute to a reduction of the minimum temperature required for melt-bonding the beads. The melt initiation temperature is preferably Tm or less, more preferably (Tm - 5°C) or less, further more preferably (Tm - 10°C) or less, most preferably (Tm - 50°C) to (Tm - 15°C). Such a reduction of the minimum temperature required for melt-bonding the beads is particularly advantageous when the polypropylene resin of the expanded PP beads has a melting point of 158°C or more and when the expanded PP beads has a high temperature peak. When the polypropylene resin of the expanded PP beads has a melting point of 158°C or more, it is preferred that the melt initiation temperature be 158°C or less, more preferably 155°C or less, further more preferably 150°C or less, most preferably 110-145°C. While the lower the melt initiation temperature of the surfaces of the expanded PP beads is, the lower is the minimum temperature required for melt-bonding the beads, an excessively low melt initiation temperature will cause a reduction of mechanical strength, such as compression strength, of a PP molding obtained from the expanded PP beads.

The expanded PP bead preferably has an MFR value which is not smaller than that of the polypropylene resin particles before the surface modification with the organic peroxide and which is in the range of 0.5-150 g/10 min, more preferably 1-100 g/10 min, most preferably 10-80 g/10 min. It is also preferred that the MFR value of the expanded PP bead be at least 1.2 times, more preferably at least 1.5 times, most preferably 1.8-3.5 times, that of polypropylene resin particles prior to the surface modification.

For measuring the MFR, the expanded PP beads are pressed at 200°C using a heat press into a sheet having a thickness of 0.1-1 mm. Pellets or columns are prepared from the sheet to obtain a sample. The sample is measured for MFR in accordance with the Japanese Industrial Standard JIS K7210-1976, Test Condition 14. In the measurement of MFR, air bubbles must be removed from the sample. If necessary, heat press treatment should be repeated up to three times in total to obtain bubble-free sheet.

The expanded PP bead preferably has a surface region having a greater oxygen content per unit weight than that of the inside region. When the organic peroxide used for the surface modification of the polypropylene resin particles is of a type which generates oxygen radicals upon being decomposed, part of the oxygen radicals are bound to surfaces of the particles. The analysis, using an infrared spectrometer equipped with the attenuated total reflectance (ATR analysis), of a surface of a PP molding obtained from expanded PP beads of the present invention shows a stronger absorption at a wavelength of near 1033 $cm^{-1}$ than that of a PP molding obtained from conventional expanded PP beads. Thus, the ratio of the peak height at 1033 $cm^{-1}$ to the peak height at 1166 $cm^{-1}$ in the case of the PP molding of the present invention is greater than that of the conventional molding. Further, the analysis using an energy dispersion spectroscope (EDS) shows that a surface of the expanded PP bead according to the present invention has an oxygen to carbon molar ratio (O/C molar ratio) is 0.2 whereas an inside of the bead has an O/C molar ratio of 0.1. Further, a surface of the conventional expanded PP bead has O/C molar ratio of 0.1. The preferred O/C ratio is at least 0.15.

Although not wishing to be bound by the theory, such an oxygen-added surface of the expanded PP bead is considered to enhance steam permeability thereof. As a result of one of the foregoing characteristics (namely, Tms<Tmi; Hs < 0.86×Hi; melt initiation temperature≤ melting point; and oxygen-added surface) or as a result of synergetic effect of two or more of the foregoing characteristics, the minimum temperature required for melt-bonding the beads is lowered while ensuring high mechanical strengths of a PP molding obtained from the beads.

The expanded PP beads obtained by the above process are aged in the atmosphere. If desired, the PP beads may be treated to increase the pressure inside of the cells thereof and, thereafter, heated with steam or hot air to improve the expansion ratio thereof.

A PP molding may be suitably obtained by a batch-type molding method in which expanded PP beads (if necessary, after being treated to increase the pressure inside of the cells thereof) are filled in a mold adapted to be heated and cooled and to be opened and closed. After closing the mold, saturated steam is fed to the mold to heat, inflate and fuse-bond the beads. The mold is then cooled and opened to take a PP molding out of the mold. A number of molding machines are commercially available. They are generally designed to have a pressure resistance of 0.41 MPa(G) or 0.45 MPa(G). Thus, the above method is generally carried out using steam having a pressure of 0.45 MPa (G) or less, more preferably 0.41 MPa(G) or less.

A PP molding may be also produced by a continuous method in which expanded PP beads (if necessary, after being treated to increase the pressure inside of the cells thereof) are fed to a path which is defined between a pair of belts continuously running in the same direction and which has a heating zone and a cooling zone. During the passage through the heating zone, the expanded PP beads are heated with saturated steam and fuse-bonded to each other. The resulting molding is cooled in the cooling zone, discharged from the path and cut to a desired length. The above continuous method is disclosed in, for example, JP-A-H09-104026, JP-A-H09-104027 and JP-A-H10-180888.

The above-mentioned treatment of the expanded PP beads to increase the pressure inside of the cells thereof may be carried out by allowing the beads to stand for a suitable period of time in a closed vessel to which pressurized air has been fed.

The apparent density of the PP molding obtained by the above methods may be controlled as desired and is generally in the range of 9-600 g/L. The PP molding preferably has open cell content (according to ASTN-D2856-70, Procedure C) of 40 % or less, more preferably 30 % or less, most preferably 25 % or less, for reasons of high mechanical strengths.

A surface layer, such as a reinforcing layer or a decorative layer) may be integrally provided on a surface of the above PP molding. A method of producing such a composite article is disclosed in, for example, US-A-5928776, US-A-6096417, US-A-6033770, US-A-5474841, EP-B-477476, WO98/34770, WO98/00287 and JP-B-3092227.

An insert may be integrated with the above PP molding such that at least part of the insert is embedded therein. A method of producing such a composite article is disclosed in, for example, US-A-6033770, US-A-5474841, JP-A-S59-1277714 and JP-B-3092227.

The following examples will further illustrate the present invention. Parts are by weight.

Examples 1-7 and Comparative Examples 1-5

100 Parts of polypropylene resin selected from those shown in Table 1 and indicated in Table 3 were blended with 0.05 part of zinc borate powder (cell controlling agent) and the blend was kneaded in an extruder and extruded into strands. The strands were immediately introduced in water at 18°C for quenching. The cooled strands were then cut into particles each having a length/diameter ratio of about 1.0 and a mean weight of 2 mg.

In a 400 liter autoclave, 100 parts of the above resin particles are charged together with 220 parts of ion-exchanged water, 0.05 part of sodium dodecylbenzenesulfonate (surfactant), 0.3 part of kaolin powder (dispersing agent), an organic peroxide selected from those shown in Table 2 and indicated in Table 3-1 or 3-2 in an amount shown in Table 3, and carbon dioxide (blowing agent) in an amount shown in Table 3-1 or 3-2. The mixture in the autoclave was dispersed with stirring and heated to a temperature lower by 5°C than the expansion temperature shown in Table 3-1 or 3-2 at an average heating rate of 3°C/min and then maintained at that temperature for 15 min. Thereafter, the temperature was raised to the expansion temperature at an average heating rate of 3°C/min and maintained at that temperature for 15 min. One end of the autoclave was then opened to discharge the dispersion to the atmosphere to obtain expanded PP beads. The discharge was carried out while feeding nitrogen gas such that the pressure within the autoclave was maintained at a pressure equal to the pressure in the autoclave immediately before the commencement of the discharge. The expanded PP beads were washed, centrifuged and allowed to stand in the atmosphere for 24 hours for aging. The beads were then measured for calorific values of a high temperature peak thereof and melting point and high temperature peaks of surface and insides region thereof. Also measured were MFR and apparent density of the beads. The results are summarized in Tables 3-1 and 3-2. In Table 2, "1 Hr half life temperature" means a temperature at which half amount of the peroxide decomposes when the peroxide is heated at that temperature for 1 hour, while "1 Min half life temperature" means a temperature at which half amount of the peroxide decomposes when the peroxide is heated at that temperature for 1 minute.

Table 1

| Resin No. | Kind of Resin | Glass Transition Point (°C) | Vicat Softening Point (°C) | MFR (g/ 10 min) | Melting Point (°C) |
|---|---|---|---|---|---|
| 1 | Propylene homopolymer | -21 | 148 | 8 | 163 |
| 2 | Ethylene-propylene random copolymer | -28 | 122 | 4 | 136 |
| 3 | Propylene homopolymer | -20 | 147 | 18 | 162 |

Table 2

| Organic Peroxide No. | Organic Peroxide | 1 Hr Half life Temperature (°C) | 1 Min Half life Temperature (°C) |
|---|---|---|---|
| 1 | Benzoyl peroxide | 92 | 130 |
| 2 | Bis(4-t-butylcyclohexyl) peroxydicarbonate | 58 | 92 |

The expanded PP beads were placed in a vessel, to which pressurized air was fed so that the inside pressure of the cells of the beads was increased to a pressure shown in Table 3. The beads were then molded with a molding machine (maximum allowed pressure: 0.55 MPa(G)) having upper and lower molds defining therebetween a mold cavity having a size of 250 mm × 200 mm × 50 mm, when the molds are fully closed. The beads were filled in the molding machine in such a state that the two molds were not completely closed but a gap of about 1 mm being present therebetween. Then, air in the mold cavity was substituted with steam. After fully closing the mold, saturated steam at a predetermined pressure was fed to the mold cavity to inflate and fuse-bond the beads. The molding was cooled with water so that the surface pressure of the molding was 0.059 MPa(G). Then, the molding was taken out of the mold, aged at 60°C for 24 hours and cooled to room temperature (23°C). The predetermined pressure of the saturated steam was the minimum pressure required for properly fuse-bonding the beads to each other and determined by repeatedly producing moldings at various saturated steam pressures increasing from 0.15 MPa(G) to 0.55 MPa(G) at an interval of 0.01 MPa(G). The minimum saturated steam pressure (minimum temperature to properly fuse-bond the expanded PP beads) is shown in Table 3-1 and 3-2.

Table 3-1

| Example | | 1 | 2 | 3 | 4 | 5 | 6 |
|---|---|---|---|---|---|---|---|
| Comparative Example | | | | | | | |
| Resin particles | No. | 1 | 1 | 1 | 1 | 1 | 2 |
| | MFR (g/10 min) | 10 | 10 | 10 | 10 | 10 | 7 |
| Peroxide | No. | 1 | 2 | 2 | 2 | 2 | 2 |
| | Amount (part) | 1 | 1 | 1 | 1 | 1 | 1 |
| Expansion temperature (°C) | | 167.0 | 167.0 | 170.0 | 167.0 | 166.0 | 144.5 |
| Amount of carbon dioxide (part) | | 3 | 3 | 2.5 | 3 | 5.5 | 6.5 |
| Apparent density of expanded PP beads (g/L) | | 87 | 131 | 89 | 87 | 78 | 48 |
| Calorific value of high temperature peak (J/g) | whole | 29.0 | 51.4 | 27.1 | 44.5 | 47.6 | 12.1 |
| | surface region | 25.2 | 39.4 | 21.6 | 33.7 | 34.2 | 9.9 |
| | inside region | 32.7 | 55.7 | 29.8 | 50.2 | 58.6 | 13.4 |
| Melting point of expanded PP beads (°C) | surface region | 161.3 | 160.8 | 160.6 | 160.8 | 160.8 | 134.5 |
| | inside region | 161.6 | 161.4 | 161.3 | 161.4 | 161.5 | 136.2 |
| MFR of expanded PP beads (g/10 min) | | 30 | 23 | 22 | 24 | 23 | 18 |
| Inside pressure of cells (MPa(G)) | | 0.23 | 0.29 | 0.16 | 0.29 | 0.35 | 0.12 |
| Minimum steam pressure (MPa(G)) | | 0.48 | 0.44 | 0.35 | 0.38 | 0.39 | 0.17 |
| Bulk density of PP molding (g/L) | | 55 | 91 | 58 | 53 | 46 | 31 |
| Bulk density of sample (g/L) | | 55 | 93 | 58 | 53 | 46 | 31 |
| Compression strength (kPa) | | 570 | 1480 | 620 | 650 | 540 | 195 |

Table 3-2

| | | Example | Comparative Example | | | | |
|---|---|---|---|---|---|---|---|
| | | 7 | 1 | 2 | 3 | 4 | 5 |
| Resin particles | No. | 3 | 1 | 1 | 1 | 2 | 3 |
| | MFR (g/10 min) | 18 | 10 | 11 | 10 | 7 | 18 |
| Peroxide | No. | 2 | – | – | – | – | – |
| | Amount (part) | 1 | 0 | 0 | 0 | 0 | 0 |
| Expansion temperature (°C) | | 160.5 | 167.5 | 168.0 | 167.5 | 145.0 | 160.5 |
| Amount of carbon dioxide (part) | | 3 | 4.5 | 5 | 5 | 7 | 4 |
| Apparent density of expanded PP beads (g/L) | | 85 | 131 | 69 | 83 | 48 | 93 |
| Calorific value of high temperature peak (J/g) | whole | 39.2 | 56.1 | 44.9 | 50.5 | 12.4 | 40.8 |
| | surface region | 20.8 | 51.5 | 41.6 | 46.4 | 11.5 | 39.4 |
| | inside region | 45.0 | 58.7 | 47.8 | 52.7 | 12.8 | 40.8 |
| Melting point of expanded PP beads (°C) | surface region | 160.0 | 162.0 | 161.8 | 161.9 | 136.6 | 161.3 |
| | inside region | 160.6 | 161.5 | 161.6 | 161.6 | 136.2 | 160.6 |
| MFR of expanded PP beads (g/10 min) | | 34 | 10 | 11 | 10 | 7 | 18 |
| Inside pressure of cells (MPa(G)) | | 0.19 | 0.29 | 0.35 | 0.29 | 0.12 | 0.50 |
| Minimum steam pressure (MPa(G)) | | 0.36 | 0.55 | 0.55 | 0.55 | 0.22 | 0.55 |
| Bulk density of PP molding (g/L) | | 54 | 91 | 46 | 54 | 31 | 61 |
| Bulk density of sample (g/L) | | 53 | 93 | 46 | 54 | 31 | 61 |
| Compression strength (kPa) | | 640 | 1410 | 510 | 650 | 195 | 790 |

In determining the minimum pressure required for properly fuse-bonding the beads to each other, whether or not the beads were properly bonded to each other was determined as follows:

A cut with a depth of 10 mm is formed on one of the two largest sides (250 mm × 200 mm) of a sample of PP molding (size: 250 mm × 200 mm × 50 mm) along a bisecting line perpendicular to the longitudinal direction thereof. The sample is then broken into halves along the cut line by bending. The interface along which the halves have been separated is observed to count a total number C1 of the beads present on the interface and the number C2 of the beads having destroyed cells. When the ratio C2/C1 is at least 0.5, the sample is regarded as having properly fuse-bonded beads.

In Comparative Examples 1-3 and 5, even when the maximum allowable pressure (0.55 MPa(g)) was used, the C2/C1 ratios were 0, 0.16, 0.12 and 0.30, respectively, and lower than 0.5. A higher pressure steam was thus needed to obtain PP moldings having properly fuse-bonded beads.

In Tables 3-1 and 3-2, the compression strength was measured as follows. A PP molding was cut without leaving any outer surfaces thereof to obtain a sample having a size of 50 mm × 50 mm × 25 mm. The sample was subjected to compression test in accordance with Japanese Industrial Standard JIS Z0234-1976, A method. Thus, the sample was compressed at 23°C at a loading rate of 10 mm/min until a strain of 55 % was reached to obtain a stress-strain curve. The stress at 50 % strain represents the compression strength.

From the results shown in Tables 3-1 and 3-2, it is seen that the expanded PP beads obtained from surface-modified propylene resin particles give PP moldings having good recyclability and high mechanical strength at a relatively low molding temperature.

In particular, comparison of Example 2 with Comparative Example 1 shows that they are almost the same with respect to the apparent density of expanded PP beads, the calorific value of whole expanded PP bead, the apparent density of PP molding, and the apparent density of a PP molding cut sample. However, the minimum pressure required for properly fuse-bonding the beads to each other is more than 0.55 MPa(G) in Comparative Example 1 and 0.44 MPa (G) in the case of Example 2, indicating that the minimum temperature required for fuse-bonding the expanded PP beads of Example 2 is lower by at least 7°C than that of Comparative Example 1. Yet, the mechanical strengths of the PP molding of Example 2 are comparable to those of Comparative Example 1, as expected from the similar calorific value of the high temperature peaks of the expanded PP beads of Comparative Example 1 and Example 2.

Comparison of Example 4 with Comparative Example 3 shows that they are almost the same with respect to the apparent density of expanded PP beads, the calorific value of whole expanded PP bead, the apparent density of PP molding, and the apparent density of a PP molding cut sample. However, the minimum pressure required for properly fuse-bonding the beads to each other is more than 0.55 MPa(G) in Comparative Example 3 and 0.38 MPa(G) in the case of Example 4, indicating that the minimum temperature required for fuse-bonding of the expanded PP beads of Example 4 is lower by at least 12°C than that of Comparative Example 3. Yet, the mechanical strengths of the PP molding of Example 4 are comparable to those of Comparative Example 3, as expected from the similar calorific value of the high temperature peaks of the expanded PP beads of Comparative Example 3 and Example 4.

Comparison of Example 5 with Comparative Example 2 shows that they are almost the same with respect to the apparent density of expanded PP beads, the calorific value of whole expanded PP bead, the apparent density of PP molding, and the apparent density of a PP molding cut sample. However, the minimum pressure required for properly fuse-bonding the beads to each other is more than 0.55 MPa(G) in Comparative Example 2 and 0.39 MPa(G) in the case of Example 5, indicating that the minimum temperature required for fuse-bonding of the expanded PP beads of Example 5 is lower by at least 11°C than that of Comparative Example 2. Yet, the mechanical strengths of the PP molding of Example 5 are comparable to those of Comparative Example 2, as expected from the similar calorific value of the high temperature peaks of the expanded PP beads of Comparative Example 2 and Example 5.

Comparison of Example 6 with Comparative Example 4 shows that they are almost the same with respect to the apparent density of expanded PP beads, the calorific value of whole expanded PP bead, the apparent density of PP molding, and the apparent density of a PP molding cut sample. However, the minimum pressure required for properly fuse-bonding the beads to each other is 0.22 MPa(G) in Comparative Example 4 and 0.17 MPa(G) in the case of Example 6, indicating that the minimum temperature required for fuse-bonding of the expanded PP beads of Example 6 is lower by at least 6°C than that of Comparative Example 4. Yet, the mechanical strengths of the PP molding of Example 6 are comparable to those of Comparative Example 4, as expected from the similar calorific value of the high temperature peaks of the expanded PP beads of Comparative Example 4 and Example 6.

Comparison of Example 1 with Example 3 shows that they are almost the same with respect to the apparent density of expanded PP beads, the calorific value of whole expanded PP bead, the apparent density of PP molding, and the apparent density of a PP molding cut sample. However, the minimum pressure required for properly fuse-bonding the beads to each other is 0.48 MPa(G) in Example 1 and 0.35 MPa(G) in the case of Example 3, indicating that the minimum temperature required for fuse-bonding of the expanded PP beads of Example 3 is lower by 9°C than that of Example 1. Significant difference in the method of production of expanded PP beads between Examples 1 and 3 is that Example 3 uses a carbonate as an organic peroxide. Thus, the use of a carbonate is desirable for reasons of reduction of minimum temperature for fuse-bonding the expanded PP beads.

Comparison of Example 7 with Comparative Example 5 shows that they are almost the same with respect to the apparent density of expanded PP beads and the calorific value of whole expanded PP bead. Though these examples differ in the apparent density of PP molding and the apparent density of a PP molding cut sample, such a difference would not hinder fair comparison with respect to minimum pressure required for properly fuse-bonding the beads to each other. Thus, the minimum pressure is more than 0.55 MPa(G) in Comparative Example 5 and 0.36 MPa(G) in the case of Example 7, indicating that the minimum temperature required for fuse-bonding of the expanded PP beads of Example 7 is lower by at least 13°C than that of Comparative Example 5. Higher mechanical strengths of the PP molding of Comparative Example 5 are as expected from the higher calorific value of the high temperature peak of the expanded PP beads of Comparative Example 5 and greater apparent density of the PP molding of Comparative Example 5 as compared with those of Example 7.

The micro differential thermoanalysis (μDTA) of the expanded PP beads obtained in Example 7 and Comparative Example 5 was performed using a micro differential thermoanalysis system ("Type 2990 Micro Thermal Analyzer" of T. A. Instrument, Japan Inc.) at a heating rate of 10°C/sec from 25°C to 200°C. The results are shown in FIG. 3. The melt initiation temperature at which a μDTA curve starts separating from the base line thereof is about 131°C in the case of the expanded PP beads of Example 7 and is about 168°C in Comparative.Example 5. Thus, the low melt initiation temperature is considered to contribute the reduction of the minimum temperature required for fuse-bonding of the expanded PP beads of Example 7.

As described previously, a PP molding is regarded as having properly fuse-bonded beads, when the ratio C2/C1 is at least 0.5. Table 4 shows relationships between C2/C1 ratios of PP moldings and saturated steam pressures used for molding. As will be appreciated from the results shown in Table 4, a slight increase in saturated steam pressure results in an increase of the C2/C1 ratio, namely increase of the bonding force between beads. A greater C2/C1 ratio is desirable because the PP molding has a higher resistance to fracture upon being bent.

Table 4

| Example No. | Saturated Steam Pressure (MPa(G)) | C2/C1 Ratio |
|---|---|---|
| Example 1 | 0.48 | 0.51 |
| | 0.49 | 0.65 |
| Example 2 | 0.44 | 0.50 |
| | 0.45 | 0.63 |
| Example 3 | 0.35 | 0.52 |
| | 0.37 | 0.80 |
| Example 4 | 0.38 | 0.50 |
| | 0.39 | 0.60 |
| Example 5 | 0.39 | 0.53 |
| | 0.41 | 0.66 |
| Example 6 | 0.17 | 0.60 |
| | 0.18 | 0.75 |
| Example 7 | 0.36 | 0.54 |
| | 0.37 | 0.60 |
| Comparative Example 4 | 0.22 | 0.55 |
| | 0.23 | 0.62 |

**Claims**

1. A process for the preparation of expanded polypropylene resin beads, wherein the polypropylene resin is (1) polypropylene homopolymer, (2) a copolymer of propylene and one or more comonomers having a propylene content of at least 60 mole %, a mixture of two or more of the copolymers (2), or a mixture of the homopolymer (1) and

EP 1 322 698 B1

the copolymer (2), the process comprising the steps of:

(a) dispersing substantially non-crosslinked polypropylene resin particles in a dispersing medium containing an organic peroxide to obtain a dispersion;

(b) maintaining said dispersion at a temperature lower than the melting point of said polypropylene resin but sufficient to decompose said organic peroxide, thereby obtaining substantially non-crosslinked, surface-modified polypropylene resin particles, the degree of cross-linking being 10% or less; and

(c) expanding said non-crosslinked, surface-modified polypropylene resin particles using a blowing agent to obtain expanded, substantially non-crosslinked polypropylene resin beads.

2. A process as claimed in claim 1, wherein, in step (b), said dispersion is maintained at a temperature not lower than the glass transition point but not higher than the Vicat softening point of said polypropylene resin.

3. A process as claimed in claim 1 or 2, wherein said blowing agent is a physical blowing agent.

4. A process as claimed in claim 3, wherein said physical blowing agent comprises at least one inorganic blowing agent selected from nitrogen, oxygen, carbon dioxide and water.

5. A process as claimed in any one of claims 1 through 4, wherein step (c) is performed so that the expanded polypropylene resin beads have an apparent density of 10 g/L to 500 g/L and a high temperature endothermic peak, in a DSC curve thereof, in addition to an intrinsic endothermic peak located at a lower temperature side of said high temperature peak.

6. A process as claimed in claim 5, wherein said high temperature endothermic peak has such an area corresponding to a calorific value in the range of 2-70 J/g.

7. A process as claimed in any one of claims 1 through 6, wherein the expanded polypropylene resin beads have an MFR value which is not smaller than that of the non-crosslinked polypropylene resin particles before step (b) and which is in the range of 0.5-150 g/10 min.

8. A process as claimed in any one of claims 1 through 7, wherein a surface region of the expanded polypropylene resin bead has a melting point lower than that of an inside region thereof.

9. A process as claimed in any one of claims 1 through 8, wherein each of said expanded polypropylene resin beads has a surface region and an inside region, wherein each of said surface and inside regions shows a high temperature endothermic peak, in a DSC curve thereof, in addition to an intrinsic endothermic peak located at a lower temperature side of said high temperature peak, and
wherein said high temperature endothermic peaks of said surface region and said inside region have such areas that correspond to calorific values of Hs and Hi, respectively, and wherein Hs and Hi have the following relationship:

$$Hs < 0.86 \times Hi.$$

10. A process as claimed in any one of claims 1 through 9, wherein said organic peroxide generates oxygen radicals when decomposed.

11. A process as claimed in any one of claims 1 through 10, wherein said organic peroxide is a substance half the amount of which decomposes when maintained for 1 hour at a temperature Th and wherein Th is not lower than the glass transition point but not higher than the Vicat softening point of said polypropylene resin.

12. A process as claimed in claim 10 or 11, wherein said organic peroxide is a carbonate.

13. An expanded, substantially non-crosslinked polypropylene resin bead having a surface region and an inside region which meet with at least one of the following conditions (a) and (b),

(a) each of said surface and inside regions shows a high temperature endothermic peak, in a DSC curve thereof, in addition to an intrinsic endothermic peak located at a lower temperature side of said high temperature peak, wherein said high temperature endothermic peaks of said surface region and said inside region have such areas that correspond to calorific values of Hs and Hi, respectively, and wherein Hs and Hi have the following relationship:

$$Hs < 0.86 \times Hi;$$

(b) said surface region has a greater oxygen content per unit weight than that of said inside region.

14. An expanded, substantially non-crosslinked polypropylene resin bead showing a high temperature endothermic peak, in a DSC curve thereof, in addition to an intrinsic endothermic peak located at a lower temperature side of said high temperature peak, said bead having a surface having a melt initiation temperature, by micro differential thermoanalysis, of (Tm - 5°C) or less where Tm is the melting point of the polypropylene resin.

15. An expanded bead as claimed in claim 13 or 14, and having an apparent density of 10 g/L to 500 g/L.

16. An expanded bead as claimed in claim 13 or 14, wherein said high temperature endothermic peak has such an area that corresponds to a calorific value in the range of 2-70 J/g.

17. An expanded bead as claimed in claim 13, wherein the surface region has a melting point lower than that of the inside region.

18. An expanded bead as claimed in claim 14, and having a surface region and an inside region, wherein the surface region has a melting point lower than that of the inside region.

19. A molded article obtained by a method comprising filling the expanded beads according to claim 13 or 14 in a mold, heating the beads in said mold to form a molding, and cooling said molding.

20. A composite molded article, comprising a molded article according to claim 19, and a surface layer integrally provided on a surface thereof.

21. A composite molded article, comprising a molded article according to claim 19, and an insert integrated therewith such that at least part of said insert is embedded therein.

**Patentansprüche**

1. Verfahren zur Herstellung von expandierten Polypropylenharzteilchen, wobei das Polypropylenharz (1) ein Polypropylen-Homopolymer, (2) ein Copolymer von Propylen und einem oder mehreren Comonomeren mit einem Polypropylengehalt von mindestens 60 Mol-%, ein Gemisch aus zwei oder mehreren Copolymeren (2) oder ein Gemisch aus Homopolymer (1) und Copolymer (2) ist, wobei das Verfahren die Schritte umfasst des:

(a) Dispergierens von im Wesentlichen nicht-vernetzten Polypropylenharzteilchen in einem Dispersionsmittel, das ein organisches Peroxid enthält, wobei eine Dispersion erhalten wird;

(b) Haltens der Dispersion bei einer Temperatur, die niedriger ist als der Schmelzpunkt des Polypropylenharzes, aber ausreichend ist, um das organische Peroxid zu zersetzen, wodurch im Wesentlichen nicht-vernetzte, Oberflächen-modifizierte Polypropylenharzteilchen erhalten werden, wobei der Grad der Vernetzung 10% oder weniger beträgt; und

(c) Expandierens der nicht-vernetzten, Oberflächen-modifizierten Polypropylenharzteilchen unter Verwendung eines Treibmittels, wobei expandierte, im Wesentlichen nicht-vernetzte Polypropylenharzteilchen erhalten werden.

2. Verfahren nach Anspruch 1 wobei in Schritt (b) die Dispersion bei einer Temperatur gehalten wird, die nicht niedriger als die Glasübergangstemperatur, aber nicht höher als die Vicat-Erweichungstemperatur des Polypropylenharzes ist.

3.  Verfahren nach Anspruch 1 oder 2, wobei das Treibmittel ein physikalisches Treibmittel ist.

4.  Verfahren nach Anspruch 3, wobei das physikalische Treibmittel mindestens ein anorganisches Treibmittel umfasst, das aus Stickstoff, Sauerstoff, Kohlendioxid und Wasser ausgewählt ist.

5.  Verfahren nach einem der Ansprüche 1 bis 4, wobei Schritt (c) so durchgeführt wird, dass die expandierten Polypropylenharzteilchen eine Fülldichte von 10 g/l bis 500 g/l und einen endothermen Hochtemperaturpeak in einer DSC-Kurve davon, zusätzlich zu einem intrinsischen endothermen Peak, der sich an einer niedrigeren Temperaturseite des Hochtemperaturpeaks befindet, aufweisen.

6.  Verfahren nach Anspruch 5, wobei der endotherme Hochtemperaturpeak einen solchen Bereich aufweist, der einem Heizwert im Bereich von 2-70 J/g entspricht.

7.  Verfahren nach einem der Ansprüche 1 bis 6, wobei die expandierten Polypropylenharzteilchen einen MFR-Wert aufweisen, welcher nicht kleiner ist als der der nicht-vernetzten Polypropylenharzteilchen vor Schritt (b) und welcher im Bereich von 0,5-150 g/10 min liegt.

8.  Verfahren nach einem der Ansprüche 1 bis 7, wobei ein Oberflächenbereich des expandierten Polypropylenharzteilchens einen Schmelzpunkt aufweist, der niedriger ist als der eines Innenbereichs davon.

9.  Verfahren nach einem der Ansprüche 1 bis 8, wobei jedes der expandierten Polypropylenharzteilchen einen Oberflächenbereich und einen Innenbereich aufweist, wobei jede der Oberflächen- und Innenbereiche einen endothermen Hochtemperaturpeak in einer DSC-Kurve davon, zusätzlich zu einem intrinsischen endothermen Peak, der sich an einer niedrigeren Temperaturseite des Hochtemperaturpeaks befindet, zeigt, und wobei die endothermen Hochtemperaturpeaks des Oberflächenbereichs und des Innenbereichs solche Bereiche aufweisen, die den Heizwerten von $H_s$ beziehungsweise $H_i$ entsprechen, und wobei $H_s$ und $H_i$ das folgende Verhältnis aufweisen:

$$H_s < 0,86 \cdot H_i.$$

10. Verfahren nach einem der Ansprüche 1 bis 9, wobei das organisches Peroxid Sauerstoffradikate erzeugt, wenn es zersetzt wird.

11. Verfahren nach einem der Ansprüche 1 bis 10, wobei das organisches Peroxid ein Stoff ist, von dem sich die Hälfte der Menge zersetzt, wenn es 1 Stunde lang bei einer Temperatur $T_h$ gehalten wird, und wobei $T_h$ nicht niedriger als die Glasübergangstemperatur, aber nicht höher als die Vicat-Erweichungstemperatur des Polypropylenharzes ist.

12. Verfahren nach Anspruch 10 oder 11, wobei das organisches Peroxid ein Carbonat ist.

13. Expandiertes, im Wesentlichen nicht-vernetztes Polypropylenharzteilchen mit einem Oberflächenbereich und einem Innenbereich, welcher mindestens eine der folgenden Bedingungen (a) und (b) erfüllt,

    (a) jeder der Oberflächen- und Innenbereiche zeigt einen endothermen Hochtemperaturpeak in einer DSC-Kurve davon, zusätzlich zu einem intrinsischen endothermen Peak, der sich an einer niedrigeren Temperaturseite des Hochtemperaturpeaks befindet, wobei die endothermen Hochtemperaturpeaks des Oberflächenbereichs und des Innenbereichs solche Bereiche aufweisen, die den Heizwerten von $H_s$ beziehungsweise $H_i$ entsprechen, und wobei $H_s$ und $H_i$ das folgende Verhältnis aufweisen:

    $$H_s < 0,86 \cdot H_i;$$

    (b) der Oberflächenbereich weist einen größeren Sauerstoffgehalt pro Gewichtseinheit als das des Innenbereichs auf.

14. Expandiertes, im Wesentlichen nicht-vernetztes Polypropylenharzteilchen, das einen endothermen Hochtemperaturpeak in einer DSC-Kurve davon, zusätzlich zu einem intrinsischen endothermen Peak, der sich an einer niedrigeren Temperaturseite des Hochtemperaturpeaks befindet, zeigt, wobei das Teilchen eine Oberfläche mit einer Anfangsschmelztemperatur nach Differentialthermomikroanalyse von (Tm - 5°C) oder weniger aufweist, wobei Tm der Schmelzpunkt des Polypropylenharzes ist.

15. Expandiertes Teilchen nach Anspruch 13 oder 14, und wobei es eine Fülldichte von 10 g/l bis 500 g/l aufweist.

16. Expandiertes Teilchen nach Anspruch 13 oder 14, wobei der endotherme Hochtemperaturpeak einen solchen Bereich aufweist, der einem Heizwert im Bereich von 2-70 J/g entspricht.

17. Expandiertes Teilchen nach Anspruch 13, wobei der Oberflächenbereich einen Schmelzpunkt aufweist, der niedriger als der des Innenbereichs ist.

18. Expandiertes Teilchen nach Anspruch 14, und wobei es einen Oberflächenbereich und einen Innenbereich aufweist, wobei der Oberflächenbereich einen Schmelzpunkt aufweist, der niedriger als der des Innenbereichs ist.

19. Geformter Gegenstand, der durch ein Verfahren erhalten wird, das das Füllen der expandierten Teilchen nach Anspruch 13 oder 14 in eine Form, Erwärmen der Teilchen in der Form, um ein Formteil zu erzeugen, und Abkühlen des Formteils umfasst.

20. Geformter Verbundstoffgegenstand, umfassend einen geformten Gegenstand nach Anspruch 19 und eine Oberflächenschicht, die auf einer Oberfläche davon integral bereitgestellt ist.

21. Geformter Verbundstoffgegenstand, umfassend einen geformten Gegenstand nach Anspruch 19 und eine Insertion, die damit integriert ist, so dass mindestens ein Teil der Insertion darin eingebettet ist.

**Revendications**

1. Procédé de préparation de perles expansées de résine de polypropylène, dans lequel la résine de polypropylène est un homopolymère de polypropylène (1), un copolymère de propylène (2) et d'un ou de plusieurs comonomères ayant une teneur en propylène d'au moins 60 % en mole, un mélange de deux ou de plusieurs des copolymères (2), ou un mélange de l'homopolymère (1) et du copolymère (2), le procédé comprenant les étapes consistant à :

   (a) disperser les particules essentiellement non-réticulées de résine de polypropylène dans un milieu de dispersion contenant un peroxyde organique pour obtenir une dispersion ;
   (b) maintenir ladite dispersion à une température inférieure à la température de fusion de ladite résine de polypropylène, mais qui est suffisante pour décomposer ledit peroxyde organique, en obtenant ainsi des particules essentiellement non-réticulées de résine de polypropylène modifiées en surface, le degré de réticulation étant de 10 % ou moins ; et
   (c) dilater lesdites particules essentiellement non-réticulées de résine de polypropylène modifiées en surface en utilisant un agent d'expansion afin d'obtenir des perles expansées essentiellement non-réticulées de résine de polypropylène.

2. Procédé selon la revendication 1, dans lequel, dans l'étape (b), ladite dispersion est maintenue à une température qui n'est pas inférieure à la température de transition vitreuse et qui n'est pas supérieure à la température de ramollissement Vicat de ladite résine de polypropylène.

3. Procédé selon la revendication 1 ou 2, dans lequel ledit agent d'expansion est un agent d'expansion physique.

4. Procédé selon la revendication 3, dans lequel ledit agent d'expansion physique comprend au moins un agent d'expansion inorganique choisi parmi l'azote, l'oxygène, le dioxyde de carbone et l'eau.

5. Procédé selon l'une quelconque des revendications 1 à 4, dans lequel l'étape (c) est réalisée de façon à ce que les perles expansées de résine de polypropylène possèdent une densité apparente de 10 g/L à 500 g/L et un pic endothermique à température élevé, dans une courbe DSC de celles-ci, en plus d'un pic endothermique intrinsèque situé à une plus basse température par rapport audit pic à température élevée.

6. Procédé selon la revendication 5, dans lequel ledit pic endothermique à température élevée possède cette aire qui correspond à une valeur calorifique située dans la gamme de 2 à 70 J/g.

**7.** Procédé selon l'une quelconque des revendications 1 à 6, dans lequel les perles expansées de résine de polypropylène possèdent une valeur MFR qui n'est pas inférieure à celle des particules non-réticulées de résine de polypropylène avant l'étape (b) et qui se situe dans la gamme de 0,5 à 150 g/10 minutes.

**8.** Procédé selon l'une quelconque des revendications 1 à 7, dans lequel une région de surface de la perle expansée de résine de polypropylène possède une température de fusion inférieure à celle d'une région interne de celle-ci.

**9.** Procédé selon l'une quelconque des revendications 1 à 8, dans lequel chacune desdites perles expansées de résine de polypropylène possèdent une région de surface et une région interne, dans lequel chacune desdites régions de surface et internes présente un pic endothermique à température élevée, dans une courbe DSC de celles-ci, en plus d'un pic endothermique intrinsèque situé à une plus basse température par rapport audit pic à température élevée, et dans lequel lesdits pics endothermiques à température élevée de ladite région de surface et de ladite région interne possèdent ces aires qui correspondent à des valeurs calorifiques Hs et Hi, respectivement, et dans lequel la relation entre Hs et Hi est la suivante :

$$Hs < 0,86 \times Hi.$$

**10.** Procédé selon l'une quelconque des revendications 1 à 9, dans lequel ledit peroxyde organique génère des radicaux oxygène quand il se décompose.

**11.** Procédé selon l'une quelconque des revendications 1 à 10, dans lequel ledit peroxyde organique est une substance **caractérisée en ce que** la moitié de sa quantité se décompose quand elle est maintenue pendant 1 heure à une température Th et dans lequel Th n'est pas inférieure à la température de transition vitreuse de ladite résine de polypropylène et n'est pas supérieure à la température de ramollissement Vicat de la dite résine de polypropylène.

**12.** Procédé selon la revendication 10 ou 11, dans lequel ledit peroxyde organique est un carbonate.

**13.** Perle de résine de polypropylène expansée et essentiellement non-réticulée possédant une région de surface et une région interne qui remplissent au moins une des conditions (a) et (b) suivantes,

(a) chacune desdites régions de surface et interne présente un pic endothermique à température élevée, dans une courbe DSC de celles-ci, en plus d'un pic endothermique intrinsèque situé à une plus basse température par rapport audit pic à température élevée, dans lequel lesdits pics endothermiques à température élevée de ladite région de surface et de ladite région interne possèdent ces aires qui correspondent à des valeurs calorifiques Hs et Hi, respectivement, et dans lequel la relation entre Hs et Hi est la suivante :

$$Hs < 0,86 \times Hi ;$$

(b) ladite région de surface possède une plus grande teneur en oxygène par unité de poids que ladite région interne.

**14.** Perle de résine de polypropylène expansée et essentiellement non-réticulée présentant un pic endothermique à température élevée, dans une courbe DSC de celle-ci, en plus d'un pic endothermique intrinsèque situé à une plus basse température par rapport audit pic à température élevée, ladite perle ayant une surface ayant une température de début de fusion, déterminée par microanalyse thermique différentielle, de (Tf - 5°C) ou inférieure où Tf est la température de fusion de la résine de polypropylène.

**15.** Perle expansée selon la revendication 13 ou 14, et ayant une densité apparente de 10 g/L à 500 g/L.

**16.** Perle expansée selon la revendication 13 ou 14, dans laquelle ledit pic endothermique à température élevée possède cette aire qui correspond à une valeur calorifique située dans la gamme de 2 à 70 J/g.

**17.** Perle expansée selon la revendication 13, dans laquelle la région de surface possède une température de fusion inférieure à celle de la région interne.

**18.** Perle expansée selon la revendication 14, et possédant une région de surface et une région interne, dans laquelle la région de surface possède une température de fusion inférieure à celle de la région interne.

19. Article moulé obtenu selon un procédé comprenant les étapes consistant à remplir un moule avec les perles expansées selon la revendication 13 ou 14, chauffer les perles dans ledit moule pour former un moulage, et refroidir ledit moulage.

20. Article moulé composite, comprenant un article moulé selon la revendication 19, et une couche superficielle intégralement formée sur sa surface.

21. Article moulé composite, comprenant un article moulé selon la revendication 19, dans lequel un prisonnier est intégré de sorte qu'au moins une partie dudit prisonnier y est enfoncé.

FIG. 1

FIG. 2

FIG. 3

EP 1 322 698 B1